Europäisches Patentamt

European Patent Office

Office européen des brevets

(19)

(11) Publication number : **0 307 232 B1**

(12) **EUROPEAN PATENT SPECIFICATION**

(45) Date of publication of patent specification :
22.01.92 Bulletin 92/04

(51) Int. Cl.⁵ : **A23L 1/325, A23P 1/08**

(21) Application number : **88308362.8**

(22) Date of filing : **09.09.88**

(54) **Fish product and method for its preparation.**

(30) Priority : **11.09.87 GB 8721454**

(43) Date of publication of application :
**15.03.89 Bulletin 89/11**

(45) Publication of the grant of the patent :
**22.01.92 Bulletin 92/04**

(84) Designated Contracting States :
**AT BE CH DE ES FR GB GR IT LI NL SE**

(56) References cited :
US-A- 3 897 573
PATENT ABSTRACTS OF JAPAN, vol. 11, no.
361 (C-459)[2808], 25th November 1987; &
JP-A-62 134 065 (SHIYOUBEE K.K.) 17-06-1987
PATENT ABSTRACTS OF JAPAN, vol. 9, no.
331 (C-321)[2054], 25th December 1985; &
JP-A-60 160 839 (NICHIRO GIYOGIYOU K.K.)
22-08-1985
PATENT ABSTRACTS OF JAPAN, vol. 7, no. 39
(C-151)[1184], 17th February 1983; & JP-A-57
189 633 (NIHON SUISAN K.K.) 22-11-1982
PATENT ABSTRACTS OF JAPAN, vol. 12, no.
28 (C-471)[2875], 27th January 1988; & JP-A-62
179 365 (SHIYOUBEE K.K.) 06-08-1987
PATENT ABSTRACTS OF JAPAN, vol. 10, no.
13 (C-323)[2070], 18th January 1986; & JP-A-60
168 353 (NICHIRO GIYOGIYOU K.K.) 31-
08-1985

(73) Proprietor : **UNILEVER PLC**
**Unilever House Blackfriars P.O. Box 68**
**London EC4P 4BQ (GB)**
(84) Designated Contracting States :
**GB**
Proprietor : **UNILEVER NV**
**Burgemeester s'Jacobplein 1 P.O. Box 760**
**NL-3000 DK Rotterdam (NL)**
(84) Designated Contracting States :
**BE CH DE ES FR GR IT LI NL SE AT**

(72) Inventor : **Cowie, William Pirie**
**17 Abbotswell Drive**
**Aberdeen AB1 5QQ Scotland (GB)**
Inventor : **Park, George Robert**
**4 Union Street Rosehearty Fraserburgh**
**Aberdeenshire AB4 4JQ Scotland (GB)**
Inventor : **Savoni, Eduardo**
**21 Webb Road**
**Raunds Northants NN9 6HH (GB)**

(74) Representative : **Keppels, Willem Richard**
**Engelbertus Gerardus, Drs. et al**
**Unilever N.V. Patent Division P.O.Box 137**
**NL-3130 AC Vlaardingen (NL)**

EP 0 307 232 B1

## Description

The invention relates to a fish product and to a method for its preparation.

One of the major problems in the fish industry is the high price of fish fillets. Ground fish is much cheaper, but products made of ground fish have an inferior appearance and texture as compared with fish fillet products.

Another disadvantage of the use of ground fish is that the resulting products become brittle and dry upon cooking.

It was found that the above-mentioned disadvantages can be overcome and that a fish product of improved quality can be made from ground fish. Therefore, the invention relates to a process for the preparation of a fish product, which process is characterised in that raw ground fish is formed into slices having a thickness of 0,5 to 7 mm, followed by the combination of a plurality of said raw slices and forming the combined slices into the desired shape by pressing, moulding or extruding.

JP-A-60/168353 describes putting meat, fish or ground fish into a freezing pan, freezing it and thereafter cutting the frozen block into slabs, which thereafter are cut into pieces. A layer of semi-fluid material, e.g. a sauce is applied on the greater part of this piece. This combined product is heated, coated and frozen again.

JP-A-60/160839 describes piling fresh fish fillets with a binding agent in between and freezing this pile under pressure into a block. Thereafter the block is sliced.

The slices obtained thereby are packed and frozen.

JP-A-57/189633 (equivalent to US-A-4,474,823) describes placing fresh fish fillets together with a binding agent randomly in a vessel, freezing into a block, cutting this block into pieces and pressure forming these pieces into the desired shape.

None of these publications relates to structuring ground fish like the process of this invention does.

In this specification the term ground fish covers all compositions substantially consisting of particles of edible fish meat, commonly made by so-called "mincing", having an average particle size of less than 5 mm. Suitable sorts of fish include, for example, cod, hake, pollack, whiting, blue whiting and other emersal species. Additives such as flavours, colouring agents, anti-oxidants, binders etc. may be present in the ground fish. For the purpose of the invention it is, however, preferred to use ground fish which contains substantially no additives.

In this specification, by raw ground fish is understood ground fish which substantially does not comprise any heat-coagulated fish protein. Normally, this means that the ground fish has not been subjected to temperatures exceeding 35°C. In this specification the term slice covers both flakes and slices, ie. particles which have a thickness which is small as compared with the other dimension. Suitable slices have, for instance, a length and width which is 5-50 times its thickness. A slice of ground fish such as used in a product and a process according to the invention will be composed of several particles of edible ground fish. The coherence of the edible fish particles within a slice will in general be safeguarded by temperature control (for example by freezing) or the use of a binding substance (eg. solubilised fish protein, polyphosphate or salt).

The slices can be formed from ground fish meat in any conventional way, for example by sawing a block of frozen ground fish into slices, by flaking or slicing a block of frozen tempered ground fish or by rolling, extruding, moulding or compressing chilled, ground fish.

For avoiding degradation of the ground fish, it is preferred that the formation of the slices is carried out at low temperatures, preferably at a temperature of less than 5°C, more preferably at a temperature of less than 0°C. In this respect, the formation of slices of a greater thickness allows, in general, higher temperatures. The slice formation at low temperatures has the further advantage that, if frozen blocks of ground fish are used as starting material, these can be formed into flakes without a long delay between storage and processing. The avoidance of high temperatures also minimises bacterial growth. If the slices are formed by sawing a frozen block of ground fish, it is preferred to keep the temperature of the frozen block between − 25°C and − 10°C. If the slices are formed by flaking or slicing a block of frozen tempered ground fish, it is preferred to keep the temperature of the fish block between − 10°C and − 5°C. This temperature range has the advantage that substantially no loss of fish meat occurs during flaking or slicing.

It is preferred to use ground fish meat having an average particle size of from 0.5-5 mm. Particles within this range are sufficiently large to retain some of the original fish structure but, on the other hand, sufficiently small to have a volume/surface ratio such that neither too much nor too little binding between the fish particles occurs.

The thickness of the slices formed from ground meat is preferably from 0.5 to 7 mm ; more preferred are slices having a thickness from 2-5 mm. After their formation, a plurality, that is more than one, preferably more than 4, most preferably more than 10, of the slices are combined and formed into the desired shape. The combination of the slices can either be random or aligned. The random combining of the slices is very convenient and is applicable to a wide variety of slice sizes ; this method is also easily reproducible on factory scale. The aligned combination, e.g. by lamination, gives products with an attractive appearance. Both methods of combination give products having an improved texture.

The slices are formed into the desired shape subsequent to combining, e.g. by pressing, moulding or extruding, possibly followed by breaking or sawing into products having the desired size.

For better shelf life, it is preferred to subject the combined slices to a freezing step during or after formation into the desired shape. For obtaining battered or breaded fish products it is preferred to apply an edible coating to the fish products after formation into the desired shape. Any coating material which is normally used for coating or breading fish products can be used.

A further aspect of the invention is the treatment of the slices prior to combining or forming into the desired shape. It was found that the quality of the final fish product can be improved by treating the surface of the raw slices with water, eg. by dipping, spraying etc. It was also found that the treatment of the surface of the raw slices with an edible water-binding substance enhanced the structure and appearance of the final product. Most preferred is the treatment of the slices with an aqueous solution or dispersion comprising the edible water-binding substance. Suitable edible water-binding substances are, for instance, gums, starches, proteins etc. Preferred is the use of pre-gelled starch, eg. pre-gelled wheat starch, as a water-binding substance. The amount of water-binding substance is preferably from 1 to 100 g/kg fish.

The invention also relates to a fish product comprising a coherent plurality of raw ground fish slices separated by planes or weakness. In this context, the term coherent means coherent under the storage conditions of the fish products. Usually these fish products are stored in the frozen or chilled state. The expression planes of weakness refers to a binding between the slices which is considerably weaker than the inter-particle binding within the slices. When present, the edible water-binding substance is substantially incorporated in the areas in and around the planes of weakness.

The invention also relates to a fish product obtained by pre-frying a fish product as described above. By pre-frying is understood the frying in oil having a temperature from 140°C-250°C for a period of 5-500 s.

The invention will be further illustrated by the following Figures and Examples.

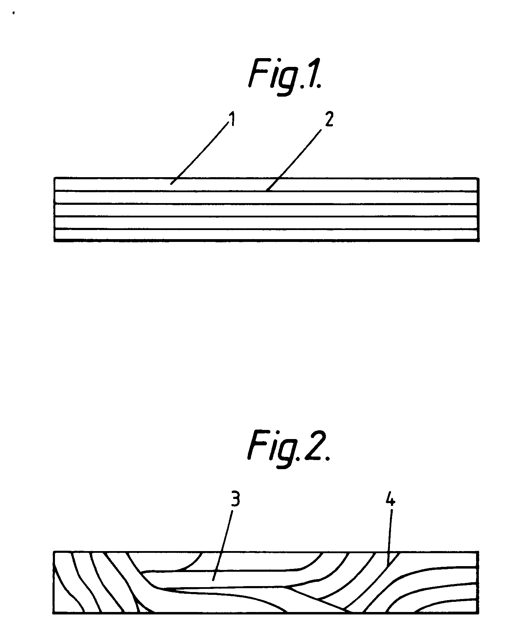

Figure 1 shows a fish product according to the invention, consisting of five laminated slices of minced fish 1 separated by planes of weakness 2.

Figure 2 shows a fish product according to the invention comprising several randomly orientated slices of minced fish 3 separated by planes of weakness 4.

## Example 1

A frozen block (temperature − 18°C) of blue whiting mince having an average particle size of approximately 3 mm is sawn into slices having a thickness of 3 mm and length and width of 80 × 100 mm. The surfaces of the slices are sprayed with water (50 g/kg fish) and 4 slices are laminated and pressed in a plate-freezer.

After freezing and demoulding, the restructured block is cut into pieces having dimensions 80 × 25 × 12 mm and coated with batter and breadcrumbs and subsequently frozen for storage.

The frozen fish fingers are prepared for consumption by frying in oil at 180°C for about 8 minutes.

The overall evaluation of texture, appearance and juiciness of the product is described in Example 5.

## Example 2

A frozen block of blue whiting mince having an average particle size of approximately 2.5 mm is tempered to a temperature of − 7°C and subsequently sliced to form slices of dimensions 4 × 50 × 80 mm.

The slices are dipped into an aqueous solution of pre-gelled starch (2%) such that about 100 g solution per kg fish is added.

The slices are subsequently combined by feeding them through a hopper and extruding (in the semi-aligned form) a continuous bar having a section of 12 × 100 mm. The bar is cut into pieces of 100 × 40 × 12 mm and subsequently blast-frozen. The frozen fish steaks are coated with tempura batter and subsequently cold-stored.

The frozen product is prepared for consumption by frying in oil at 180°C for about 8 minutes.

The overall evaluation of the texture, appearance and juiciness of the product is described in Example 5.

## Example 3

A frozen block of cod mince having an average particle size of about 2 mm is sawn into logs of dimensions 60 × 60 × 480 mm. The logs are them tempered to a temperature of − 5°C and sliced into slices of dimensions 60 × 60 × 5 mm. These slices are dusted with starch powder (approx. 20 g/kg fish) and subsequently randomly combined to a block of dimensions 60 × 90 × 150 mm. The block is pressed, frozen and then sawn into steaks of dimensions 60 × 90 × 10 mm.

The steaks are coated with batter-crumb-batter and pre-fried. The product obtained is stored under frozen conditions and prepared for consumption by baking in an oven for 25 minutes.

The overall evaluation of texture, appearance and juiciness is described in Example 5.

Example 4

A frozen block of minced fish having an average particle size of 3 mm and a temperature of – 7°C is sliced into slices having dimensions 4 × 50 × 50 mm. The slices are randomly combined in a moulding machine into circular steaks having a cross-section of 120 mm and a thickness of 15 mm. The product is coated with a batter and breading material and subsequently frozen.

The product is prepared for consumption by frying for 8 minutes at 180°C.

The overall evaluation of the texture, appearance and juiciness of the product is described in Example 5.

Example 5

The products obtained in Examples 1-4 were prepared for consumption and subsequently compared in quality with a coated fried steak made of fish mince and a coated fish steak made of fish fillet. The products were evaluated in texture, appearance and juiciness. For all these parameters the fish fillet product closely resembled the original fish structure. The fish mince product was evaluated as having the lowest quality. The products obtained in Examples 1-4 all had improved quality with respect to the minced fish product, but were not as good as the fish fillet product.

As to texture, appearance and juiciness, the product of Example 2 was judged better than those of Examples 1 and 3, which were judged to be of approximately the same quality. The product obtained in Example 4 was judged worse than the products of the foregoing examples, but, especially in appearance, better than the fish mince product.

**Claims**

1. Process for the preparation of a fish product, characterized in that raw ground fish is formed into slices having a thickness of 0.5 to 7 mm, whereupon a plurality of raw slices (1, 3) are combined and formed into the desired shape by pressing, moulding or extruding.

2. Process according to Claim 1, characterized in that the surface of the raw slices (1, 3) is treated with water prior to combining or forming into the desired shape.

3. Process according to Claim 2 or 2, characterized in that the surface of the raw slices (1, 3) is treated with an edible water-binding substance prior to combining or forming into the desired shape.

4. Process according to Claims 2 or 3, characterized in that the surface of the raw slices (1, 3) is sprayed with an aqueous solution or dispersion of an edible water-binding substance.

5. Process according to Claims 2 or 3, characterized in that the raw slices (1, 3) are dipped into an aqueous solution or dispersion of an edible water-binding substance.

6. Process according to any one of Claims 3-5, characterized in that the water-binding substance is pregelled starch.

7. Process according to any one of Claims 1-6, characterized in that ground fish having an average particle size of 0.5-5 mm is used.

8. Process according to any one of Claims 1-7, characterized in that the ground fish is formed into slices (1, 3) having a thickness of 2-5 mm.

9. Process according to any one of Claims 1-8, characterized in that the slices (1, 3) are formed at a temperature of less than 5°C, preferably less than 0°C.

10. Process according to any one of Claims 1-9, characterized in that the fish product is frozen after forming into the desired shape.

11. Process according to any one of Claims 1-10, characterized in that the fish product is coated after forming into the desired shape.

12. Fish product obtrainable by claim 1 comprising a coherent plurality of raw ground fish slices (1, 3) separated by planes of weakness (2, 4).

13. Fish product according to Claim 12, characterized in that the slices (1, 3) have a thickness of 0.5-7 mm and are composed of fish particles having an average particle size of 0.5-5 mm.

14. Fish product according to Claim 12 or 13, characterized by an edible water-binding substance substantially incorporated in the areas in and around the planes of weakness (2, 4).

15. Fish product according to Claim 14, wherein the edible water-binding substance is a pre-gelled starch.

16. Fish product according to any one Claims 12-15, characterized in that it is frozen.

17. Fish product according to any one of Claims 12-16, characterized in that it is coated.

18. Fish product obtained by pre-frying a fish product according to any one of Claims 12-17.

**Patentansprüche**

1. Verfahren zur Herstellung eines Fischproduktes, dadurch gekennzeichnet, daß roher gemahlener Fisch zu Scheiben mit einer Dicke von 0,5 bis 7 mm geformt wird, wonach eine Mehrzahl von rohen Scheiben (1, 3) vereinigt und durch Pressen, Formen oder Extrudieren in die gewünschte Form gebracht wird.

2. Verfahren nach Anspruch 1, dadurch gekennzeichnet, daß die Oberfläche der rohen Scheiben (1, 3) vor dem Vereinigen oder Formen in die gewünschte Form mit Wasser behandelt wird.

3. Verfahren nach Anspruch 1 oder 2, dadurch gekennzeichnet, daß die Oberfläche der rohen Scheiben (1, 3) vor dem Vereinigen oder Formen in die gewünschte Form mit einer eßbaren wasserbindenden Substanz behandelt wird.

4. Verfahren nach Anspruch 2 oder 3, dadurch gekennzeichnet, daß die Oberfläche der rohen Scheiben (1, 3) mit einer wässerigen Lösung oder Dispersion einer eßbaren wasserbindenden Substanz besprüht wird.

5. Verfahren nach Anspruch 2 oder 3, dadurch gekennzeichnet, daß die rohen Scheiben (1, 3) in eine wässerige Lösung oder Dispersion einer eßbaren wasserbindenden Substanz getaucht werden.

6. Verfahren nach einem der Ansprüche 3 bis 5, dadurch gekennzeichnet, daß die wasserbindende Substanz vorgelierte Stärke ist.

7. Verfahren nach einem der Ansprüche 1 bis 6, dadurch gekennzeichnet, daß gemahlener Fisch mit einer durchschnittlichen Teilchengröße von 0,5 bis 5 mm verwendet wird.

8. Verfahren nach einem der Ansprüche 1 bis 7, dadurch gekennzeichnet, daß der gemahlene Fisch zu Scheiben (1, 3) mit einer Dicke von 2 bis 5 mm geformt wird.

9. Verfahren nach einem der Ansprüche 1 bis 8, dadurch gekennzeichnet, daß die Scheiben (1, 3) bei einer Temperatur von weniger als 5°C, vorzugsweise weniger als 5°C, geformt werden.

10. Verfahren nach einem der Ansprüche 1 bis 9, dadurch gekennzeichnet, daß das Fischprodukt nach dem Formen in die gewünschte Form gefroren wird.

11. Verfahren nach einem der Ansprüche 1 bis 10, dadurch gekennzeichnet, daß das Fischprodukt nach dem Formen in die gewünschte Form beschichtet wird.

12. Fischprodukt, erhältlich durch Anspruch 1, beinhaltend eine kohärente Mehrzahl von rohen Scheiben (1, 3) aus gemahlenem Fisch, getrennt durch Schwächungsebenen (2, 4).

13. Fischprodukt nach Anspruch 12, dadurch gekennzeichnet, daß die Scheiben (1, 3) eine Dicke von 0,5 bis 7 mm aufweisen und aus Fischteilchen zusammengesetzt sind, die eine durchschnittliche Teilchengröße von 0,5 bis 5 mm aufweisen.

14. Fischprodukt nach Anspruch 12 oder 13, gekennzeichnet durch eine eßbare wasserbindende Substanz, die im wesentlichen in den Gebieten in und um die Schwächungsebenen (2, 4) inkorporiert ist.

15. Fischprodukt nach Anspruch 14, worin die eßbare wasserbindende Substanz vorgelierte Stärke ist.

16. Fischprodukt nach einem der Ansprüche 12 bis 15, dadurch gekennzeichnet, daß es gefroren ist.

17. Fischprodukt nach einem der Ansprüche 12 bis 16, dadurch gekennzeichnet, daß es beschichtet ist.

18. Fischprodukt, erhalten durch Vorbraten eines Fischproduktes nach einem der Ansprüche 12 bis 17.

**Revendications**

1. Procédé de préparation d'un produit de poisson, caractérisé en ce qu'on forme des tranches d'une épaisseur de 0,5 à 7 mm avec le poisson broyé cru, après quoi on combine plusieurs tranches crues (1, 3) et on leur donne la forme désirée par pressage, moulage ou extrusion.

2. Procédé selon la revendication 1, caractérisé en ce qu'on traite la surface des tranches crues (1, 3) avec de l'eau avant de les combiner ou les façonner à la forme désirée.

3. Procédé selon la revendication 1 ou 2, caractérisé en ce qu'on traite la surface des tranches crues (1, 3) avec une substance comestible se liant à l'eau avant de combiner ou façonner à la forme désirée.

4. Procédé selon la revendication 2 ou 3, caractérisé en ce qu'on pulvérise sur la surface des tranches crues (1, 3) une solution ou dispersion aqueuse d'une substance comestible se liant à l'eau.

5. Procédé selon la revendication 2 ou 3, caractérisé en ce qu'on trempe les tranches crues (1, 3) dans une solution ou dispersion aqueuse d'une substance comestible se liant à l'eau.

6. Procédé selon l'une quelconque des revendications 3 à 5, caractérisé en ce que la substance se liant à l'eau est un amidon prégélifié.

7. Procédé selon l'une quelconque des revendication 1 à 6, caractérisé en ce qu'on utilise un poisson broyé d'une granulométrie moyenne de 0,5 à 5 mm.

8. Procédé selon l'une quelconque des revendications 1 à 7, caractérisé en ce qu'on façonne le poisson broyé en tranches (1, 3) d'une épaisseur de 2 à 5 mm.

9. Procédé selon l'une quelconque des revendications 1 à 8, caractérisé en ce qu'on forme les tranches (1,3) à une température inférieure à 5°C, de préférence inférieure à 0°C.

10. Procédé selon l'une quelconque des revendications 1 à 9, caractérisé en ce qu'on congèle le produit de poisson après l'avoir façonné à la forme désirée.

11. Procédé selon l'une quelconque des revendications 1 à 10, caractérisé en ce qu'on enrobe le produit de poisson après l'avoir façonné à la forme désirée.

12. Produit de poisson pouvant être obtenu par le procédé selon la revendication 1, qui comprend une série cohérente de tranches de poisson broyé cru (1, 3) séparées par des plans de faiblesse (2, 4).

13. Produit de poisson selon la revendication 12, caractérisé en ce que les tranches (1, 3) ont une épaisseur de 0,5 à 7 mm et sont composées de particules de poisson d'une granulométrie moyenne de 0,5 à 5 mm.

14. Produit de poisson selon la revendication 12 ou 13, caractérisé par une substance comestible se liant à l'eau sensiblement incorporée dans les zones et sur le pourtour des plans de faiblesse (2, 4).

15. Produit de poisson selon la revendication 14, dans lequel la substance comestible se liant à l'eau est un amidon prégélifié.

16. Produit de poisson selon l'une quelconque des revendications 12 à 15, caractérisé en ce qu'il est congelé.

17. Produit de poisson selon l'une quelconque des revendications 12 à 16, caractérisé en ce qu'il est enrobé.

18. Produit de poisson, pouvant être obtenu par la pré-friture d'un produit de poisson selon l'une quelconque des revendications 12 à 17.

Fig.1.

Fig.2.